# EUROPEAN PATENT SPECIFICATION

(11) **EP 3 394 411 B1**
(45) Date of publication and mention of the grant of the patent: **05.02.2020**
(21) Application number: 15826038.0
(22) Date of filing: 23.12.2015
(51) Int. Cl.: F02D 41/22, F02D 35/02, F02D 41/00, F02D 19/06, F02D 19/10

(54) **METHOD FOR OPERATING PISTON ENGINE AND PISTON ENGINE**
VERFAHREN ZUM BETRIEB EINES KOLBENMOTORS UND KOLBENMOTOR
PROCÉDÉ DE FONCTIONNEMENT DE MOTEUR À PISTON ET MOTEUR À PISTON

(43) Date of publication of application: 31.10.2018
(73) Proprietor: Wärtsilä Finland Oy, 65100 Vaasa (FI)
(72) Inventor: VUOHIJOKI, Antti, 65100 Vaasa (FI)
(74) Representative: Berggren Oy, Helsinki & Oulu
(86) International application number: PCT/FI2015/050940
(87) International publication number: WO 2017/109269

(56) References cited:
- EP-A1- 2 915 987
- EP-A2- 2 000 655
- WO-A2-2011/154609

## Description

### Technical field of the invention

The present invention relates to a method for operating a four-stroke dual-fuel or multi-fuel piston engine, as defined in claim 1. The invention also concerns a four-stroke dual-fuel or multi-fuel piston engine as defined in the other independent claim.

### Background of the invention

A possibility to operate a piston engine using a gaseous main fuel, such as natural gas, provides many advantages, for instance in the form of low emissions. Gaseous fuels usually need an ignition source, which is in most cases either a spark plug or pilot fuel. In dual-fuel engines, the gaseous main fuel is ignited by utilizing liquid pilot fuel, which is injected into the cylinders of the engine either directly or via a prechamber. The gaseous fuel is introduced into the intake duct and flows through the intake ports into the cylinders during the intake stroke. The liquid pilot fuel is injected by means of pilot fuel injectors at the end of the compression stroke. The pilot fuel is self-ignited, and the ignition of the pilot fuel triggers combustion of the gaseous main fuel.

Problems occur if a valve needle of a pilot fuel injector gets stuck in an open or partially open position. In that case, the pilot fuel injection continues over the following combustion stroke, exhaust stroke, intake stroke and compression stroke. The excessive pilot fuel causes problems especially during the compression stroke. The presence of pilot fuel in a cylinder during the compression stroke can lead to premature ignition of the air/fuel mixture, and since the cumulated amount of the pilot fuel can be relatively large, the early combustion of the mixture can damage the cylinder head. Varying power outputs of the cylinders of the engine also cause vibrations, and unburned fuel increases hydrocarbon emissions of the engine.

EP 2915987 A1 discloses a method of evaluating operability of gaseous fuel admission valves, for example during transition from liquid to gaseous fuel. In the method, for each cylinder a combustion process parameter is measured and operability of the gaseous fuel admission valves is evaluated based on the measured combustion process parameters.

EP 2000655 A2 discloses a method of operating an engine. Upon occurrence of abnormal combustion, burning state in a cylinder can be corrected through fuel regulation including fuel cutoff.

### Summary of the invention

An object of the present invention is to provide an improved method for operating a four-stroke dual-fuel or multi-fuel piston engine. The characterizing features of the method according to the invention are given in claim 1. Another object of the invention is to provide an improved four-stroke dual-fuel or multi-fuel piston engine. The characterizing features of the engine according to the invention are given in the other independent claim.

The method according to the invention comprises the steps of transmitting a first control signal to a gas admission valve for opening the gas admission valve and introducing gaseous fuel into an intake duct and further into a cylinder of the engine, transmitting a second control signal to a pilot fuel injector for opening the pilot fuel injector and introducing liquid pilot fuel into the cylinder for igniting mixture of intake air and the gaseous fuel introduced via the gas admission valve, measuring pressure in the cylinder during combustion stroke at a predetermined crank angle, which is after presumed ignition of the fuel and before opening of exhaust valves, comparing the measured pressure to a predetermined limit value, and in case the measured pressure exceeds the predetermined limit value, disabling the first control signal and the second control signal.

The engine according to the invention comprises a first fuel injection system for gaseous fuel, the first fuel injection system comprising a gas admission valve for each cylinder of the engine for introducing gaseous fuel into an intake duct of the engine, a second fuel injection system for liquid pilot fuel, the second fuel injection system comprising a pilot fuel injector for each cylinder of the engine for injecting liquid pilot fuel into the cylinders of the engine, a pressure sensor for each cylinder of the engine for measuring pressure in the cylinders of the engine, and a control unit, which is configured to implement the method defined above.

With the method according to the invention and in an engine according to the invention, a faulty fuel injector that is stuck in an open or a partially open position can be detected early, and damages caused by excessive fuel amounts in a cylinder can be prevented. The normal operation in those cylinders of the engine where excessive pressure is not detected can be continued.

According to an embodiment of the invention, the pressure is measured at a crank angle, which is after a presumable peak pressure crank angle. The effects of a leaking pilot fuel injector can be best detected after the peak pressure has been reached. For more reliable detection of a leaking pilot fuel injector, the pressure should preferably be measured shortly before opening of the exhaust valves. Therefore, the pressure could be measured at most 50 degrees before exhaust valve opening, or even at most 20 or 10 degrees before exhaust valve opening.

According to an embodiment of the invention, the pressure is measured at a crank angle, which is at least 20 degrees after top dead center. The pressure can be measured even at a crank angle, which is at least 40 or 60 degrees after top dead center. When the pressure is not measured at the beginning of the combustion stroke, it is ensured that the effects of a leaking pilot fuel injector can be detected. The pressure can be measured at the end of combustion.

According to an embodiment of the invention, the predetermined limit value is determined on the basis of pressure values measured in the cylinder at the predetermined crank angle during a predetermined number of previous combustion strokes.

According to the invention, the cylinder is monitored during the following combustion stroke for detecting possible combustion in the cylinder, and in case combustion is detected, at least the first control signal is kept disabled and an alarm is triggered. The possible combustion in the cylinder can be detected, for instance, by monitoring the pressure in the cylinder. Also the second control signal can be kept disabled in case combustion is detected.

According to an embodiment of the invention, in case no combustion is detected, the first control signal and the second control signal are enabled.

Combustion in the cylinder where the control signals are disabled is an indication of an open pilot fuel injector. By keeping at least the first control signal disabled, the amount of fuel in the cylinder can be minimized. On the other hand, if no combustion is detected, the excessive cylinder pressure may have been caused by some other reason, in which case normal operation in the cylinder can be resumed.

### Brief description of the drawings

Embodiments of the invention are described below in more detail with reference to the accompanying drawings, in which
Fig. 1 shows schematically a simplified view of the pilot fuel and main fuel injection systems of a piston engine, and
Fig. 2 shows the method according to an embodiment of the invention as a flowchart.

### Description of embodiments of the invention

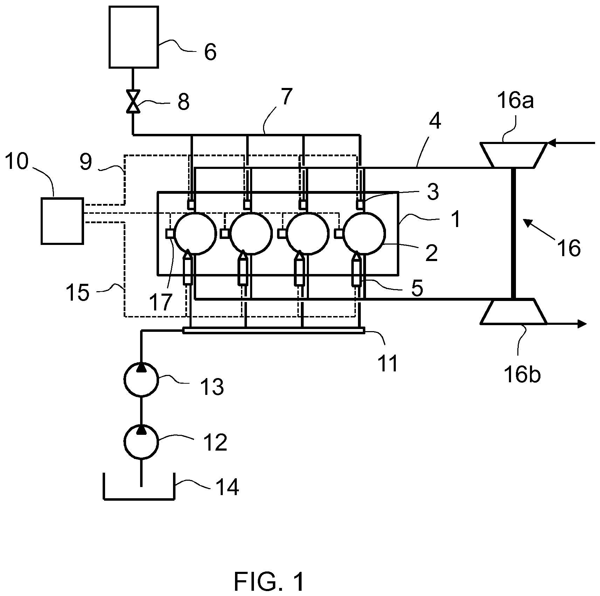

Figure 1 shows schematically pilot fuel and gaseous fuel injection systems of a piston engine 1. The engine 1 is a large internal combustion engine, such as a main or an auxiliary engine of a ship or an engine that is used at a power plant for producing electricity. The rated power of the engine 1 is at least 150 kW per cylinder and the cylinder bore is at least 150 mm. In figure 1, four cylinders 2 that are arranged in line are shown, but the engine 1 can comprise any reasonable number of cylinders 2 that are arranged, for instance, in line or in a V-configuration. The engine 1 of figure 1 is a dual-fuel engine that can be operated at least in a gaseous fuel mode using a gaseous main fuel and liquid pilot fuel. The gaseous fuel can be, for instance, natural gas or biogas. The liquid pilot fuel can be, for instance, light fuel oil (LFO) or marine diesel oil (MDO). The engine 1 can possibly also be operated in a liquid fuel mode using only liquid fuel, such as LFO or MDO. The engine 1 could also be a multi-fuel engine, which can be operated using two or more different types of liquid fuels and/or gaseous fuels. For instance, the engine 1 could be a tri-fuel engine that can be operated in a gaseous fuel mode using gaseous main fuel and liquid pilot fuel, and in two different liquid fuel modes, for instance in a first liquid fuel mode using heavy fuel oil or other fuel containing mainly residual fuel oil and in a second liquid fuel mode using light fuel oil or other fuel containing mainly distillate fuel oil.

The engine 1 is connected to a turbocharger 16 comprising a compressor 16a and a turbine 16b for pressurizing the intake air of the engine 1. The engine 1 could also be provided with two or more turbochargers connected in series and/or in parallel.

The engine 1 is provided with separate fuel injection systems for the gaseous fuel and the pilot fuel. The gaseous fuel is stored in a gas tank 6, from which it is supplied via a gas line 7 into the cylinders 2 of the engine 1. The gas line 7 is provided with a main gas valve 8 for controlling the supply of the gaseous main fuel into the gas line 7. The main gas valve 8 can be closed for example when the engine 1 is operated in a liquid fuel mode. Each cylinder 2 of the engine 1 is provided with an own gas admission valve 3. The gas admission valves 3 are individually controllable. A first control line 9 connects the gas admission valves 3 to a control unit 10, which controls the opening and closing of the gas admission valves 3. The gas admission valves 3 are opened and closed by means of an actuator, such as a step motor. The gas admission valves 3 are arranged to introduce the gaseous fuel into an intake duct 4 of the engine 1. Each gas admission valve 3 is located close to the intake valves of the respective cylinder 2. The gaseous fuel is introduced into the intake duct 4 during the intake stroke. When the intake valves of a cylinder 2 are open, the gaseous fuel flows into the cylinder 2 forming an air/fuel mixture. The air/fuel mixture is preferably a lean mixture comprising more air than is needed for the complete combustion of both the gaseous fuel and the liquid pilot fuel. It should be noted that figure 1 shows only a simplified example of a fuel injection system for gaseous main fuel. The fuel injection system can comprise many additional components not shown in the figures, for instance different valves, filters etc.

The fuel injection system for the liquid pilot fuel comprises an own pilot fuel injector 5 for each cylinder 2 of the engine 1. The pilot fuel injector 5 can be arranged to inject the fuel either directly into the cylinder 2 or into a prechamber. The pilot fuel injectors 5 are individually controllable. The pilot fuel injectors 5 can be, for instance, electrically actuated. A second control line 15 connects the pilot fuel injectors 5 to the control unit 10, which controls the opening and closing of the pilot fuel injectors 5. Each pilot fuel injector 5 comprises a valve needle, which can be lifted for injecting fuel through the pilot fuel injector 5.

In the embodiment of figure 1, the pilot fuel injection system is a common rail fuel injection system comprising a fuel rail 11 for storing pressurized fuel. All the pilot fuel injectors 5 are connected to the same fuel rail 11. A low-pressure pump 12 supplies fuel from a pilot fuel tank 14 to a high-pressure pump 13, which raises the pressure of the pilot fuel to a level that is suitable for direct fuel injection and supplies it into the fuel rail 11, from which the fuel is supplied to the pilot fuel injectors 5. The fuel injection pressure can be in the range of 800 to 3000 bar. Instead of a single fuel rail 11, each pilot fuel injector 5 could be provided with an own fuel accumulator, or the pilot fuel injection system could comprise two or more fuel rails 11, each serving two or more pilot fuel injectors 5. In addition to the use as a pilot fuel injection system, the fuel injection system of figure 1 could also be used for injecting liquid main fuel into the cylinders 2 of the engine 1. The same fuel injection system could thus be used when the engine 1 is operated in a liquid fuel mode using only liquid fuel. In that case, the pilot fuel injectors 5 would function also as main fuel injectors. It is also possible that only parts of the fuel injection system of figure 1 are used as part of a fuel injection system for liquid main fuel. For instance, additional fuel injectors could be connected to the fuel rail 11 of figure 1 for injecting liquid main fuel. In the gaseous fuel mode, the liquid pilot fuel would be injected by the pilot fuel injectors 5, and in a liquid fuel mode the liquid fuel would be injected by main fuel injectors. In both operating modes, the same low-pressure pump 12 and high-pressure pump 13 would be used. The pilot fuel injectors 5 and the main fuel injectors could be integrated in fuel injector units.

The pilot fuel is injected into the cylinders 2 of the engine 1 via the pilot fuel injectors 5 during the compression stroke when the piston is close to top dead center. The pilot fuel injection could also take place partly during the combustion stroke.

In addition to the fuel injection systems shown in figure 1, the engine 1 can be provided with at least one additional fuel injection system, for instance for injecting liquid main fuel into the cylinders 2 of the engine 1. The additional fuel injection system could be a common rail system or a fuel injection system having an own fuel injection pump for each cylinder 2 of the engine 1.

Each cylinder 2 of the engine 1 is provided with a pressure sensor 17 for monitoring pressure in the cylinder 2. The pressure sensors 17 are connected to the control unit 10 and measurement data can thus be transmitted from the pressure sensors 17 to the control unit 10.

During normal operation of the engine 1 in the gaseous fuel mode, intake valves of each cylinder 2 of the engine 1 open at the end of the exhaust stroke. At the beginning of the intake stroke, the control unit 10 transmits a first control signal via the first control line 9 to the gas admission valve 3 for opening the gas admission valve 3. The gas admission valve 3 opens and the valve 3 is kept open for a certain period of time for allowing the gaseous fuel to flow into the intake duct 4 and further into the cylinder 3. Before the end of the intake stroke, the gas admission valve 3 is closed. Also the intake valves are closed, and during the compression stroke following the intake stroke, the air/fuel mixture in the cylinder 2 is compressed. As the piston in the cylinder 2 approaches top dead center, the control unit 10 transmits a second control signal via the second control line 15 to the pilot fuel injector 5 for opening the pilot fuel injector 5 and for injecting liquid pilot fuel into the cylinder 2. The valve needle of the pilot fuel injector 5 is lifted for a short period of time and pilot fuel is injected into the cylinder 2. After a certain ignition lag, the pilot fuel is self-ignited. The amount of the pilot fuel is relatively small. The combustion of the pilot fuel can release, for instance, less than five percent of the heat released by the combustion in the cylinder 2. The combustion of the pilot fuel ignites also the mixture of air and the gaseous main fuel. The pressure in the cylinder 2 rapidly rises until the peak cylinder pressure is reached, typically in the range of 0 to 20 degrees after top dead center. As the piston moves towards bottom dead center, the pressure in the cylinder 2 decreases. When the piston is close to bottom dead center, the exhaust valves open. During the exhaust stroke, the exhaust gases flow out of the cylinder 2, and a new engine cycle begins.

If the valve needle of a pilot fuel injector 5 is stuck in an open or partly open position, the injection of the pilot fuel is not terminated at the end of the compression stroke, but continues over the combustion stroke. At the beginning of the combustion, the cylinder pressure behaves normally. However, since the pilot fuel injection is continued during the combustion, the combustion continues for a longer period of time than expected. As a result, at a certain crank angle when the combustion normally would have ended, the cylinder pressure is higher than expected. The pressure in the cylinder 2 stays at a higher level than normally until the opening of the exhaust valves. If the valve needle of the pilot fuel injector 5 stays open, the pilot fuel injection continues over the exhaust stroke. During the exhaust stroke, most of the injected pilot fuel flows out of the cylinder 2. However, when the exhaust valves are closed, pilot fuel starts to accumulate in the cylinder 2. The pilot fuel injected into the cylinder 2 is mixed with the air and gaseous fuel introduced into the cylinder 2 during the intake stroke. During the compression stroke, the pressure in the cylinder 2 starts to rise. Also the temperature rises, and when the temperature in the cylinder 2 reaches the self-ignition temperature of the pilot fuel, the mixture in the cylinder 2 is ignited. This may be even before the pilot fuel injection should start. Due to the accumulation of the pilot fuel, the total amount of the fuel (pilot and main fuel) can be significantly greater than during normal operation of the engine 1. In combination with the premature ignition, the combustion of the excessive amount of fuel can cause damage for example to the cylinder head. The amount of pilot fuel accumulated in the cylinder 2 during the intake stroke and the compression stroke can be equivalent to the total fuel amount injected into the cylinder 2 at 50 percent engine load.

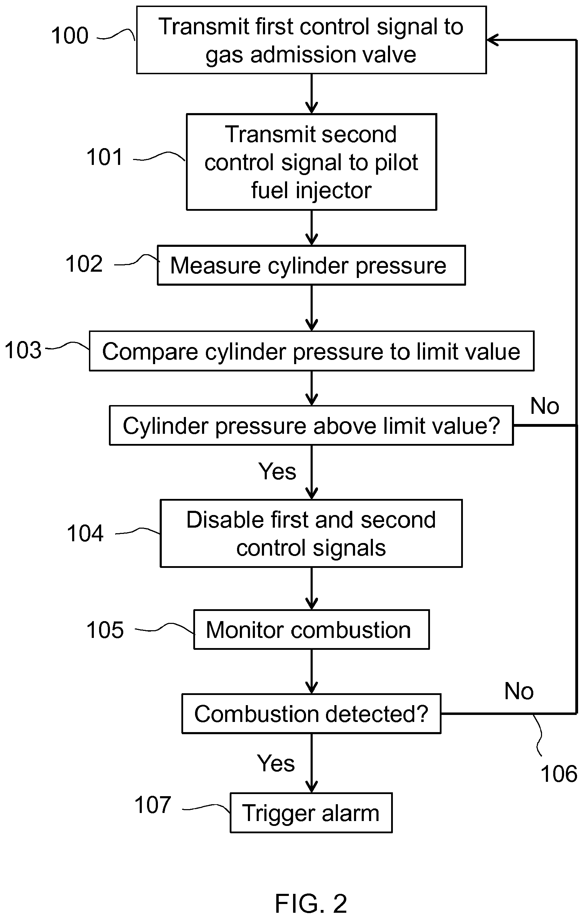

For preventing damages and reducing other harmful effects caused by a faulty pilot fuel injector 5, a method according to the invention is provided. Figure 2 shows as a flowchart a method according to an embodiment of the invention. According to the invention, the gas admission valves 3 and the pilot fuel injectors 5 are operated normally during an intake stroke and a compression stroke. A first control signal is thus transmitted to a gas admission valve 3 for opening the gas admission valve 3 (step 100) and a second control signal is transmitted to a pilot fuel injector 5 for lifting the valve needle and injecting pilot fuel into a cylinder 2 (step 101). During the combustion stroke, the pressure in the cylinder 2 is monitored (step 102). The pressure monitoring can be continuous, or the pressure can be measured only at a certain predetermined crank angle. The predetermined crank angle is selected so that the effect of an open pilot fuel injector 5 on the cylinder pressure can be detected. The pressure measurement therefore takes place after the presumed ignition of the fuel and before the opening of the exhaust valves. The presumed ignition means the moment at which the combustion is supposed to start. In case the pilot fuel injector 5 is leaking, the actual starting moment of the combustion can be earlier. It is also possible that no ignition takes place in the cylinder 2, for instance in the case the pilot fuel injector 5 does not open.

The pressure is preferably measured after the crank angle, at which the peak pressure occurs. The pressure measurement can take place for instance in the range of 20 to 150 degrees after top dead center. The pressure can be measured, for instance, at the end of combustion. It is not necessary to know the starting moment of the ignition, or the crank angle of the peak pressure, but the crank angle at which the pressure is measured can be chosen such that it is certainly after the peak pressure crank angle. A faulty pilot fuel injector 5 can be best detected when the pressure is measured shortly before the opening of the exhaust valves. Therefore, the pressure can be measured at a crank angle, which is for example at most 20 degrees before opening of the exhaust valves. The opening of the exhaust valves refers here to the moment when the opening movement of the exhaust valves starts. By choosing a crank angle close to the opening moment of the exhaust valves, it is also ensured that the measurement takes place after the peak pressure has been reached. The predetermined crank angle does not need to be same for all operating conditions of the engine 1, but it can depend for example on the engine speed and load.

After measuring the pressure, the measured pressure is compared to a predetermined limit value in the control unit 10 (step 103). The limit value is not constant, but depends at least on the engine speed and load. For instance, if the engine speed is constant, the pressure in the cylinder 2 is higher with greater engine load. Therefore, the predetermined limit value is higher for greater engine load at certain engine speed. The predetermined limit value can be based, for instance, on the pressure values measured during a certain number of preceding combustion strokes. A mean value can be calculated from the previous measurements, and the predetermined limit value can be a certain percentage or amount higher than the calculated mean value. For instance, the predetermined limit value can be 3-15 or 5-10 percent higher than the mean value. The predetermined limit value could also be based on simulation results or experimental data from tests conducted on the engine type in question. The predetermined limit values for different engine speeds and loads can be stored in a look-up table, and the control unit 10 can compare the measured pressure value to a value retrieved from the look-up table.

If the measured pressure exceeds the predetermined limit value, the first and the second control signals are disabled for the cylinder 2 in question (step 104). In those cylinders 2, where the measured cylinder pressure does not exceed the predetermined limit value, injection of both the pilot fuel and the gaseous main fuel is continued normally. The first control signal is thus transmitted to the gas admission valves 3 and the second control signal is transmitted to the pilot fuel injectors 5 of the non-affected cylinders 2.

The increased cylinder pressure can be a result of an open pilot fuel injector 5. However, the increased pressure could also be caused for example by a faulty gas admission valve 3. If the fault is in a pilot fuel injector 5 having a valve needle stuck in an open or partially open position, pilot fuel injection into the cylinder continues despite of the disabled second control signal. However, since the admission of the gaseous main fuel into the cylinder is prevented, the total amount of fuel introduced into the cylinder 2 during the following intake and combustion strokes is reasonable, and the cylinder pressure remains at an acceptable level. Therefore, damaging of the cylinder head and other components of the engine 1 can be avoided.

During the following combustion stroke, the cylinder 2 is monitored for detecting possible combustion in the cylinder 2 (step 105). The combustion can be detected for example by measuring the cylinder pressure at least at a certain predetermined crank angle. The cylinder pressure is measured before the opening of the exhaust valves. The cylinder pressure can be measured at the same crank angle as during the previous combustion stroke, but the crank angle could also be another crank angle after the presumed ignition of pilot fuel. Instead of pressure monitoring, combustion could be detected for example by monitoring vibrations of the engine 1. If combustion is detected, it is an indication of an open pilot fuel injector 5. Therefore, at least the first control signal is kept disabled for minimizing fuel flow into the cylinder 2 and an alarm is triggered (step 107). Also the second control signal can be kept disabled. In case no combustion is detected, the increased cylinder pressure has most likely been caused by some other reason. In that case, the first and the second control signals are enabled for continuing normal operation of the engine 1 (step 106).

The cylinder pressures of all the cylinders 2 of the engine 1 are measured during each combustion stroke when the engine 1 is operated. A faulty pilot fuel injector 5 can thus be detected in good time before the following gas injection, and gas injection can be disabled. The early detection during the combustion stroke gives the control system of the engine 1 enough time to cut the gas injection into the cylinder 2 with a faulty pilot fuel injector 5. The engine 1 is thus effectively protected against excessive cylinder pressures.

It will be appreciated by a person skilled in the art that the invention is not limited to the embodiments described above, but may vary within the scope of the appended claims.

## Claims

1. A method for operating a four-stroke dual-fuel or multi-fuel piston engine (1), the method comprising the steps of
- transmitting a first control signal to a gas admission valve (3) for opening the gas admission valve (3) and introducing gaseous fuel into an intake duct (4) and further into a cylinder (2) of the engine (1) (100),
- transmitting a second control signal to a pilot fuel injector (5) for opening the pilot fuel injector (5) and introducing liquid pilot fuel into the cylinder (2) for igniting mixture of intake air and the gaseous fuel introduced via the gas admission valve (3) (101),
- measuring pressure in the cylinder (2) during combustion stroke at a predetermined crank angle, which is after presumed ignition of the fuel and before opening of exhaust valves (102),
- comparing the measured pressure to a predetermined limit value (103), and
- in case the measured pressure exceeds the predetermined limit value, disabling the first control signal (104),
**characterized in that** in case the measured pressure exceeds the predetermined limit value, also the second control signal is disabled, the cylinder (2) is monitored during the following combustion stroke for detecting possible combustion in the cylinder (2) (105), and in case combustion is detected, at least the first control signal is kept disabled and an alarm is triggered (107).

2. A method according to claim 1, wherein the pressure is measured at a crank angle, which is after a presumable peak pressure crank angle.

3. A method according to claim 1 or 2, wherein the pressure is measured at most 50 degrees before exhaust valve opening.

4. A method according to claim 3, wherein the pressure is measured at most 20 degrees before exhaust valve opening.

5. A method according to claim 4, wherein the pressure is measured at most 10 degrees before exhaust valve opening.

6. A method according to any of the preceding claims, wherein the pressure is measured at a crank angle, which is at least 20 degrees after top dead center.

7. A method according to claim 6, wherein the pressure is measured at a crank angle, which is at least 40 degrees after top dead center.

8. A method according to claim 7, wherein the pressure is measured at a crank angle, which is at least 60 degrees after top dead center.

9. A method according to any of the preceding claims, wherein the pressure is measured at the end of combustion.

10. A method according to any of the preceding claims, wherein the predetermined limit value is determined on the basis of pressure values measured in the cylinder (2) at the predetermined crank angle during a predetermined number of previous combustion strokes.

11. A method according to any of the preceding claims, wherein the possible combustion in the cylinder (2) is detected by monitoring the pressure in the cylinder (2).

12. A method according to any of the preceding claims, wherein also the second control signal is kept disabled in case combustion is detected.

13. A method according to any of the preceding claims, wherein in case no combustion is detected, the first control signal and the second control signal are enabled (106).

14. A four-stroke dual-fuel or multi-fuel piston engine (1), comprising
- a first fuel injection system for gaseous fuel, the first fuel injection system comprising a gas admission valve (3) for each cylinder (2) of the engine (1) for introducing gaseous fuel into an intake duct (4) of the engine (1),
- a second fuel injection system for liquid pilot fuel, the second fuel injection system comprising a pilot fuel injector (5) for each cylinder (2) of the engine (1) for injecting liquid pilot fuel into the cylinders (2) of the engine (1),
- a pressure sensor (17) for each cylinder (2) of the engine (1) for measuring pressure in the cylinders (2) of the engine (1), and
- a control unit (10),
**characterized in that** the control unit (10) is configured to implement the method according to any of the preceding claims.

## Patentansprüche

1. Verfahren zum Betreiben eines Viertakt-Zweistoff- oder Mehrstoff-Kolbenmotors (1), wobei das Verfahren die folgenden Schritte umfasst
- Übertragen eines ersten Steuersignals an ein Gaseinlassventil (3) zum Öffnen des Gaseinlassventils (3) und Einleiten von gasförmigem Kraftstoff in einen Einlasskanal (4) und weiter in einen Zylinder (2) des Motors (1) (100),
- Übertragen eines zweiten Steuersignals zu einem Pilotkraftstoffinjektor (5) zum Öffnen des Pilotkraftstoffinjektors (5) und Einführen von flüssigem Pilotkraftstoff in den Zylinder (2) zum Entzünden einer Mischung aus Einlassluft und gasförmigem Kraftstoff, die über das Gaseinlassventil eingeführt wird (3) (101),
- Messen des Drucks im Zylinder (2) während des Verbrennungshubs bei einem vorbestimmten Kurbelwinkel, der nach der vermuteten Zündung des Kraftstoffs und vor dem Öffnen der Auslassventile (102) liegt,
- Vergleichen des gemessenen Drucks mit einem vorbestimmten Grenzwert (103) und
- falls der gemessene Druck den vorbestimmten Grenzwert überschreitet, Deaktivieren des ersten Steuersignals (104),
**dadurch gekennzeichnet, dass** in dem Fall, dass der gemessene Druck den vorbestimmten Grenzwert überschreitet, auch das zweite Steuersignal deaktiviert wird, der Zylinder (2) während des folgenden Verbrennungstakts überwacht wird, um eine mögliche Verbrennung in dem Zylinder (2) (105) zu erfassen, und in dem Fall, dass eine Verbrennung erkannt wird, mindestens das erste Steuersignal deaktiviert gehalten und ein Alarm ausgelöst wird (107) .

2. Verfahren nach Anspruch 1, wobei der Druck bei einem Kurbelwinkel gemessen wird, der nach einem voraussichtlichen Spitzendruck-Kurbelwinkel liegt.

3. Verfahren nach Anspruch 1 oder 2, wobei der Druck bei höchstens 50 Grad vor dem Öffnen des Auslassventils gemessen wird.

4. Verfahren nach Anspruch 3, wobei der Druck höchstens 20 Grad vor dem Öffnen des Auslassventils gemessen wird.

5. Verfahren nach Anspruch 4, wobei der Druck höchstens 10 Grad vor dem Öffnen des Auslassventils gemessen wird.

6. Verfahren nach einem der vorhergehenden Ansprüche, wobei der Druck bei einem Kurbelwinkel gemessen wird, der mindestens 20 Grad nach dem oberen Totpunkt liegt.

7. Verfahren nach Anspruch 6, wobei der Druck bei einem Kurbelwinkel gemessen wird, der mindestens 40 Grad nach dem oberen Totpunkt liegt.

8. Verfahren nach Anspruch 7, wobei der Druck bei einem Kurbelwinkel gemessen wird, der mindestens 60 Grad nach dem oberen Totpunkt liegt.

9. Verfahren nach einem der vorhergehenden Ansprüche, wobei der Druck beim Verbrennungsende gemessen wird.

10. Verfahren nach einem der vorhergehenden Ansprüche, wobei der vorbestimmte Grenzwert auf der Grundlage von Druckwerten bestimmt wird, die in dem Zylinder (2) bei dem vorbestimmten Kurbelwinkel während einer vorbestimmten Anzahl von vorhergehenden Verbrennungstakten gemessen werden.

11. Verfahren nach einem der vorhergehenden Ansprüche, wobei die mögliche Verbrennung in dem Zylinder (2) durch Überwachen des Drucks in dem Zylinder (2) erkannt wird.

12. Verfahren nach einem der vorhergehenden Ansprüche, wobei auch das zweite Steuersignal deaktiviert bleibt, falls eine Verbrennung erkannt wird.

13. Verfahren nach einem der vorhergehenden Ansprüche, wobei in dem Fall, dass keine Verbrennung erkannt wird, das erste Steuersignal und das zweite Steuersignal aktiviert werden (106).

14. Viertakt-Zweistoff- oder Mehrstoff-Kolbenmotor (1), umfassend
- ein erstes Kraftstoffeinspritzsystem für gasförmigen Kraftstoff, wobei das erste Kraftstoffeinspritzsystem ein Gaseinlassventil (3) für jeden Zylinder (2) des Motors (1) zum Einleiten von gasförmigem Kraftstoff in einen Einlasskanal (4) des Motors (1) umfasst,
- ein zweites Kraftstoffeinspritzsystem für flüssigen Pilotkraftstoff, wobei das zweite Kraftstoffeinspritzsystem einen Pilotkraftstoffinjektor (5) für jeden Zylinder (2) des Motors (1) zum Einspritzen von flüssigem Pilotkraftstoff in die Zylinder (2) des Motors (1) umfasst,
- einen Drucksensor (17) für jeden Zylinder (2) des Motors (1) zum Messen des Drucks in den Zylindern (2) des Motors (1) und
- eine Steuereinheit (10),
**dadurch gekennzeichnet, dass** die Steuereinheit (10) konfiguriert ist, das Verfahren nach einem der vorhergehenden Ansprüche zu implementieren.

## Revendications

1. Procédé de fonctionnement d'un moteur à piston à double carburant ou multi-carburant à quatre temps (1), ce procédé comprenant les étapes suivantes :
- transmission d'un premier signal de commande à une soupape d'admission de gaz (3) pour ouvrir la soupape d'admission de gaz (3) et introduire du carburant gazeux dans une conduite d'admission (4) et ensuite dans un cylindre (2) du moteur (1) (100),
- transmission d'un second signal de commande à un injecteur de carburant pilote (5) pour ouvrir l'injecteur de carburant pilote (5) et introduire du carburant pilote liquide dans le cylindre (2) pour allumer le mélange d'air d'admission et le carburant liquide introduit via la soupape d'admission de gaz (3) (101),
- mesure de la pression dans le cylindre (2) pendant la course de combustion à un angle de manivelle prédéterminé qui se situe après l'allumage présumé du carburant et avant l'ouverture des soupapes d'échappement (102),
- comparaison de la pression mesurée à une valeur prédéterminée (103), et
- dans le cas où la pression mesurée excède la valeur limite prédéterminée, désactivation du premier signal de commande (104),
**caractérisé en ce que**, dans le cas où la pression mesurée excède la valeur limite prédéterminée, le second signal de commande est désactivé, le cylindre (2) est contrôlé pendant la course de combustion suivante pour détecter la combustion possible dans le cylindre (2) (105), dans le cas où une combustion est détectée, au moins le premier signal de commande est maintenu désactivé et une alarme est déclenchée (107).

2. Procédé selon la revendication 1, dans lequel la pression est mesurée à un angle de manivelle qui se situe avant un angle de manivelle de crête de pression pouvant être présumée.

3. Procédé selon la revendication 1 ou 2, dans lequel la pression est mesurée au plus 50 degrés avant l'ouverture de la soupape d'échappement.

4. Procédé selon la revendication 3, dans lequel la pression est mesurée au plus 20 degrés avant l'ouverture de la soupape d'échappement.

5. Procédé selon la revendication 4, dans lequel la pression est mesurée au plus 10 degrés avant l'ouverture de la soupape d'échappement.

6. Procédé selon l'une quelconque des revendications précédentes, dans lequel la pression est mesurée à un angle de manivelle qui se situe au moins 20 degrés après le point mort haut.

7. Procédé selon la revendication 6, dans lequel la pression est mesurée à un angle de manivelle qui se situe au moins 40 degrés après le point mort haut.

8. Procédé selon la revendication 7, dans lequel la pression est mesurée à un angle de manivelle qui se situe au moins 60 degrés après le point mort haut.

9. Procédé selon l'une quelconque des revendications précédentes, dans lequel la pression est mesurée à la fin de la combustion.

10. Procédé selon l'une quelconque des revendications précédentes, dans lequel la valeur limite prédéterminée est déterminée sur la base des valeurs de pression mesurées dans le cylindre (2) à un angle de manivelle prédéterminé pendant un nombre prédéterminé de courses de combustion précédentes.

11. Procédé selon l'une quelconque des revendications précédentes, dans lequel la combustion possible dans le cylindre (2) est détectée en contrôlant la pression dans le cylindre (2).

12. Procédé selon l'une quelconque des revendications précédentes, dans lequel le second signal de commande est aussi maintenu désactivé dans le cas où une combustion est détectée.

13. Procédé selon l'une quelconque des revendications précédentes, dans lequel, dans le cas où une combustion est détectée, le premier signal de commande et le second signal de commande sont activés (106).

14. Moteur à piston à double carburant ou multi-carburant à quatre temps (1), comprenant
- un premier système d'injection de carburant pour du carburant gazeux, le premier système d'injection de carburant comprenant une soupape d'admission de gaz (3) pour chaque cylindre (2) du moteur (1) pour introduire du carburant gazeux dans une conduite d'admission (4) du moteur (1),
- un second système d'injection de carburant pour du carburant pilote liquide, le second système d'injection de carburant comprenant un injecteur de carburant pilote (5) pour chaque cylindre (2) du moteur (1) pour injecter du carburant pilote liquide dans les cylindres (2) du moteur (1),
- un capteur de pression (17) pour chaque cylindre (2) du moteur (1) pour mesurer la pression dans les cylindres (2) du moteur (1), et
- une unité de commande (10),
**caractérisé en ce que** l'unité de commande (10) est conçue pour mettre en œuvre le procédé selon l'une quelconque des revendications précédentes.
